**Europäisches Patentamt**

(19) **European Patent Office**

**Office européen des brevets**

(11) Numéro de publication: **0 122 677**
**A1**

(12) # DEMANDE DE BREVET EUROPEEN

(21) Numéro de dépôt: **84200512.6**

(22) Date de dépôt: **10.04.84**

(51) Int. Cl.³: **H 02 K 15/12**
**H 02 K 29/02**

(30) Priorité: **15.04.83 IT 939583**

(43) Date de publication de la demande:
**24.10.84 Bulletin 84/43**

(84) Etats contractants désignés:
**CH DE FR GB IT LI**

(71) Demandeur: **Mavilor Systèmes S.A.**
**Grenette**
**CH-1700 Fribourg(CH)**

(72) Inventeur: **Tassinario, Giampiero**
**Via Arrighetto da Settimello, 129**
**Calenzano (Firenze)(IT)**

(74) Mandataire: **Jörchel, Dietrich R.A. et al,**
**c/o BUGNION S.A. Case postale 375**
**CH-1211 Genève 12 - Champel(CH)**

(54) **Procédé de fabrication d'un induit pour un moteur électrique à commutation électronique et induit fabriqué selon ce procédé.**

(57) On fabrique un bobinage d'induit (4) plat en forme de rosette avec des bobines dont les extrémités séparées débouchent toutes dans l'espace intérieur central de la rosette. On confectionne un anneau de connexions (5) adapté à l'espace circulaire intérieur de la rosette et présentant des segments (C1) isolés électriquement les uns des autres en matériau conducteur, pour la connexion des extrémités des bobines. On confectionne en outre un fer d'induit (6) en forme d'anneau circulaire en matériau magnétique dont le diamètre intérieur est un peu plus grand que le diamètre extérieur de l'anneau de connexions (5). On relie les extrémités des bobines aux segments (C1) de l'anneau de connexions (5) de la manière correspondant à la configuration de bobinage désiré. Puis on dispose le bobinage (4) avec l'anneau de connexions (5) et le fer d'induit (6) coaxialement dans un moule et on noye les parties dans une masse de résine synthétique (13).

*Fig. 3*

EP 0 122 677 A1

- 1 -

## Procédé de fabrication d'un induit pour un moteur électrique à commutation électronique et induit fabriqué selon ce procédé.

L'invention a pour objet un procédé de fabrication d'un induit pour un moteur électrique à commutation électronique comprenant un rotor muni d'aimants créant un champ magnétique axial et au moins un induit fixe disposé de l'un des côtés du rotor.

L'invention a aussi pour objet un induit fabriqué selon ce procédé.

Les induits conventionnels pour des moteurs de ce type (comme par exemple décrit dans le brevet suisse 632 878) sont assemblés lors du montage du moteur et comportent en général un fer d'induit muni de rainures dans lesquelles doivent être insérés les fils, respectivement les spires du bobinage.

En outre, la largeur et la forme des rainures prévues dans le fer d'induit doivent être adaptées à la quantité de cuivre du bobinage, donc au diamètre des fils et au nombre de spires des bobines individuelles. Pour cette raison, il n'est pas possible en général de combiner un fer d'induit d'une structure donnée avec des bobinages ayant des configurations différentes.

Ces rainures provoquent dans le fonctionnement du moteur une modulation du flux magnétique qui produit une irrégularité de rotation, surtout aux faibles vitesses.

L'invention a pour but un procédé de fabrication qui est plus simple et rationnel et qui permet d'obtenir une unité d'induit préfabriquée compacte et plate, qui peut être montée facilement comme stator du moteur, par exemple fixée au flasque des parties statoriques, ce nouveau procédé permettant à la fois de combiner un fer d'induit donné du même type avec des bobinages très différents selon le type du moteur voulu.

Ce but est atteint par le fait que :

a) on fabrique et prépare d'abord les parties séparées suivantes de l'induit :

a1) on confectionne un bobinage d'induit plat en forme de rosette avec des bobines qui se recouvrent mutuellement partiellement et dont les extrémités séparées débouchent toutes dans l'espace intérieur central de la rosette,

a2) on confectionne un anneau de connexions adapté à l'espace circulaire intérieur de la rosette et présentant des segments isolés électriquement les uns des autres en matériau conducteur, pour la connexion des extrémités des bobines, le nombre de ces segments étant au moins aussi grand que le nombre des extrémités des bobines à connecter, séparément l'une de l'autre, au moins quelques-uns de ces segments sont arrangés de manière telle que des conducteurs extérieurs peuvent être connectés ultérieurement conduisant au circuit de commutation du moteur, et

a3) on confectionne un fer d'induit en forme d'anneau circulaire en matériau magnétique dont le diamètre intérieur est un peu plus grand que le diamètre extérieur de l'anneau de connexions, constitué de préférence d'un ruban de fer à surfaces isolées et enroulé sur lui-même ;

b) on assemble ensuite des parties de la manière suivante :

b1) on relie les extrémités des bobines aux segments de l'anneau de connexions de la manière correspondant à la configuration de bobinage désiré, ces extrémités de bobines étant de préférence introduites à force dans des entailles prévues sur la face périphérique des segments,

b2) puis on dispose la parties ainsi constituée du bobinage d'induit et de l'anneau de connexions, et le fer d'induit en forme d'anneau, coaxialement dans un moule, l'un des côtés de la bobine plate reposant sur l'un des côtés plats du fer d'induit, et on noye les parties susmentionnées dans une masse de résine synthétique, de telle sorte qu'au moins les côtés des segments de l'anneau de connexions qui se trouvent après montage du côté opposé au rotor, restent libres de résine, pour pouvoir être connectés auxdits conducteurs extérieurs.

De cette manière on obtient des induits plats et très stables qui se fabriquent très économiquement. Etant donné qu'il n'y a pas de rainures dans le fer d'induit la limitation en vue de la configuration du bobinage due à ces rainures n'existe plus, et on peut sans autre combiner le même fer d'induit avec des bobinages des configurations très différentes. Une autre caractéristique importante est donc que les nouveaux induits peuvent être conçus facilement aussi bien pour un moteur à courant continu avec un bobinage soit imbriqué, soit ondulé, avec un nombre considérable de points de commutation correspondant à un grand nombre de lamelles au collecteur, qu'à un moteur synchrone alternatif normal ou autosynchronisé. En outre, l'absence de rainures procure une très bonne régularité de rotation, surtout aux faibles vitesses.

Des formes d'exécution judicieuses du procédé selon l'invention et l'induit ainsi fabriqué sont définies dans les revendications dépendantes.

Le dessin annexé illustre, à titre d'exemple, un procédé selon l'invention pour la fabrication d'un induit avec un bobinage imbriqué destiné à un moteur à courant continu et des variantes.

La figure 1 est une coupe axiale à travers un moteur à courant continu dans lequel est monté un induit fabriqué selon le nouveau procédé.

La figure 2 est une vue de dessus du rotor, du même moteur.

La figure 3 est une vue en coupe axiale de l'un des induits du moteur selon la figure 1, à plus grande échelle.

La figure 4 est une vue partielle schématique du bobinage d'induit.

La figure 5 est une vue schématique de l'une des bobines du bobinage d'induit.

La figure 6 est une vue, dans le sens de la flèche F6 de la figure 3, de dessus de l'anneau de connexions de l'induit avec ces segments, auquel est connecté le bobinage du stator, dont quelques enroulements sont montrés schématiquement à l'exclusion des autres de l'élément de l'induit.

La figure 7 est une vue de dessus schématique de l'anneau de connexions selon la figure 6 dans laquelle on a indiqué schématiquement les fils conducteurs entre les segments de l'anneau de connexions.

La figure 8 est une vue en perspective d'une ébauche d'anneau de connexions partiellement usinée.

La figure 9 est une vue partielle d'un anneau de connexions dans une phase ultérieure d'usinage.

La figure 10 est une vue de côté de l'anneau de connexions selon la figure 9, partiellement en coupe, avec, partiellement illustrés, les fils conducteurs avant la fixation entre les segments voulus.

La figure 11 représente l'anneau de connexions selon la figure 10, après la fixation des fils conducteurs, le moulage dans la matière plastique et l'usinage final avec les extrémités des bobines connectées au segment $c_1$.

La figure 12 est une représentation schématique de l'arrangement des enroulements du bobinage de stator.

La figure 13 est une représentation de principe du circuit de commutation électronique avec les conducteurs provenant de l'anneau de connexions.

La figure 14 est une tabelle représentant le cycle d'une suite des commutations pour l'excitation d'un bobinage d'induit.

La figure 15 représente une variante d'exécution du bobinage d'induit.

Les figures 16 et 17 montrent les schémas pour un bobinage ondulé avec son anneau de connexions et les figures 18 et 19 pour un bobinage d'un moteur synchrone.

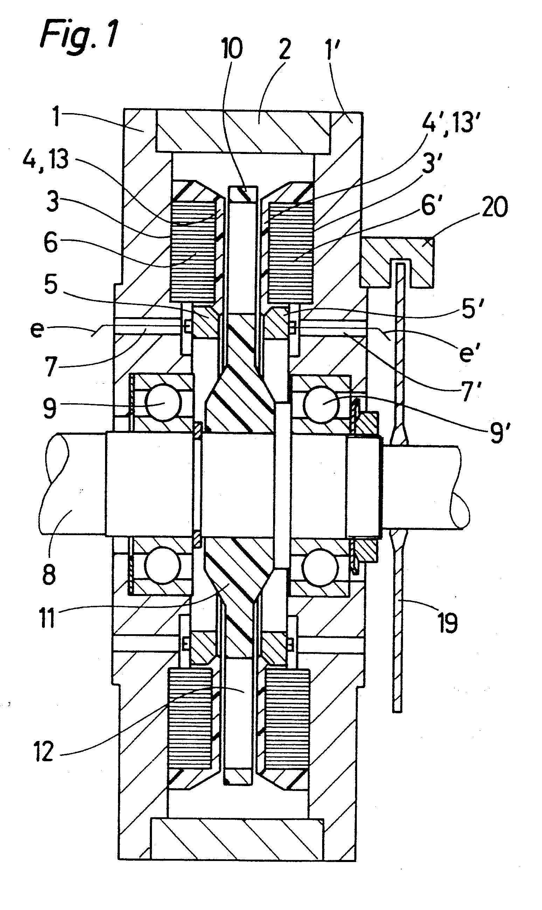

Le moteur représenté à la figure 1 présente deux moitiés de stator disposées symétriquement de chaque côté du rotor 10 en forme de disque, ces demi-stators étant constitués chacun d'un flasque 1, respectivement 1' en aluminium et de l'induit 3, respectivement 3', fixé à la face intérieure du flasque correspondant 1, respectivement 1'. Les deux flasques 1 et 1' sont reliés par un anneau 2 de manière à former un boîtier.

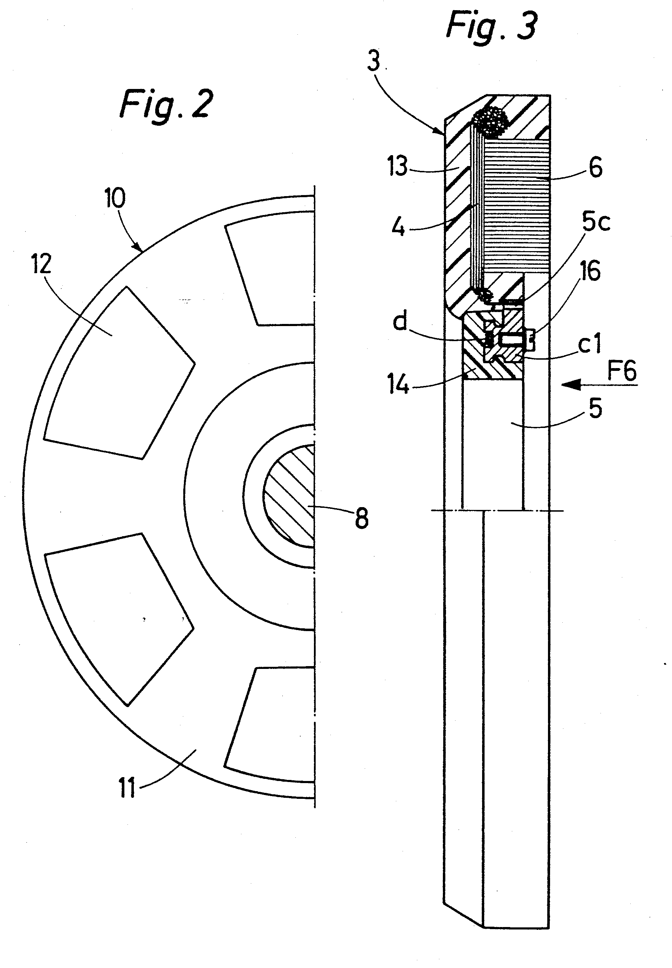

Selon les figures 1 et 3 l'induit 3 est constitué d'un bobinage d'induit 4 en forme de panier plat et d'un fer d'induit annulaire 6, tous les deux noyés dans une matière plastique 13, ainsi que incorporé coaxialement dans l'espace intérieur de ces deux éléments, d'un anneau de connexions 5 noyé partiellement dans une matière platique 14 dont la zone périphérique est elle-même noyée dans la matière 13. L'induit 3 ainsi formé constitue une pièce compacte, dont la fabrication sera décrite plus en détail. Le fer d'induit 6 est formé par l'enroulement d'une tôle magnétique en forme de ruban, formant un paquet de tôles de forme annulaire et le bobinage d'induit 4 est disposé sur son côté en regard du rotor 10. L'autre induit 3' a la même construction composée des éléments 4',5' et 6' ainsi que des matières plastiques 13' et 14'.

L'anneau de connexions 5, respectivement 5' qui sera également décrit plus loin plus en détail, est divisé en une pluralité de segments isolés les uns des autres et aux extrémités desquels sont connectées les bobines constituant le bobinage d'induit 4, respectivement 4'. Des conducteurs électriques e, e' (fig.1) connectent les segments de l'anneau de connexions 5, respectivement 5' vers l'extérieur aux circuits de commutation électronique sont fixés par des vis 16 aux segments concernés comme montré à la figure 3 pour le segment c1, et passent à travers des canaux 7, respectivement 7' s'étendant parallèlement à l'axe du moteur dans le flasque 1, respectivement 1'. Lesdits circuits sont commandés par un codeur rotatif connu en soi comprenant un disque codeur 19 fixé sur l'arbre moteur 8 et un système photo-électrique 20 avec des émetteurs lumineux comme des photodiodes et des récepteurs, le disque codeur ayant des encoches, passe dans l'espace entre les émetteurs et les récepteurs.

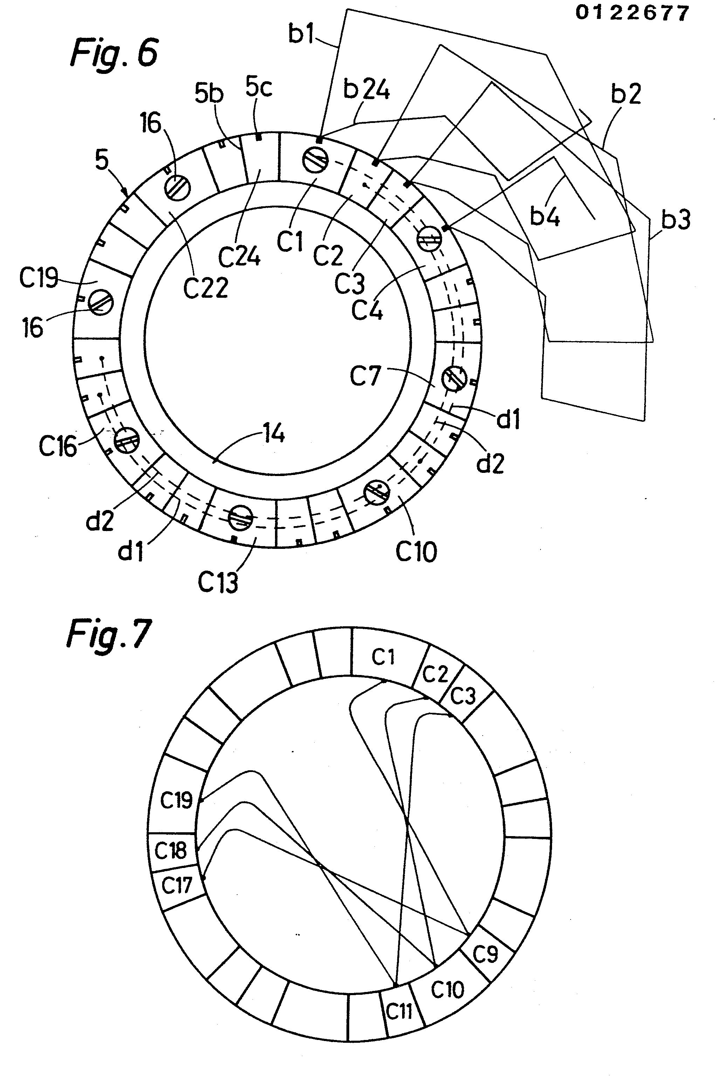

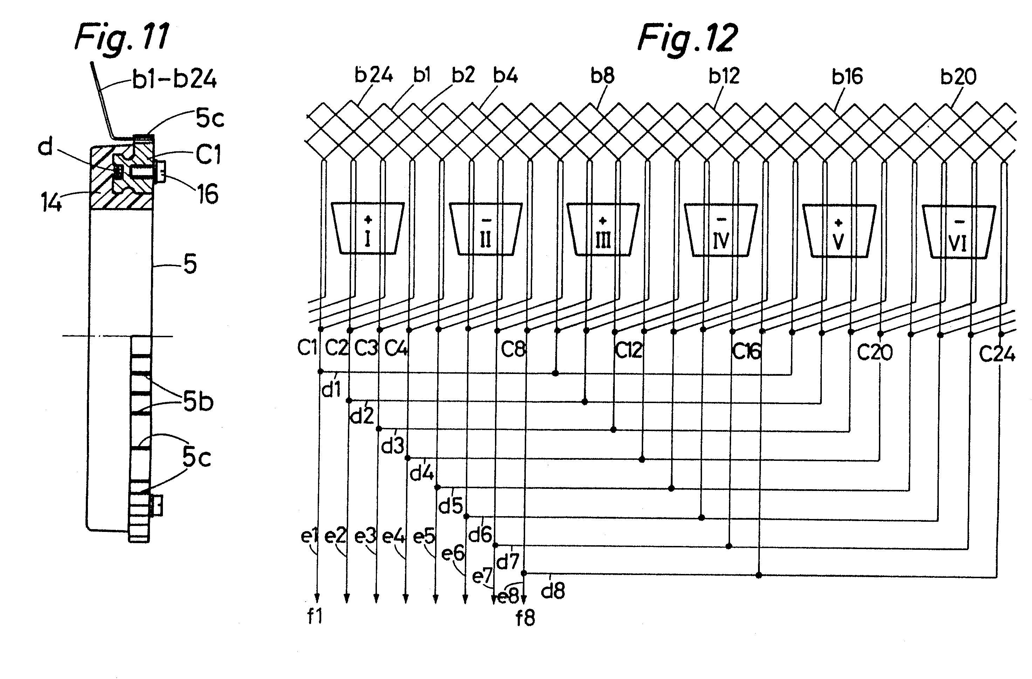

La construction et le branchement des bobines constituant le bobinage d'induit 4, respectivement 4' seront décrits plus loin en détail en relation avec les figures 6 et 12.

Le rotor 10 en forme de disque plat est, par exemple, pressé sur l'arbre 8 du moteur. Il est constitué d'un corps 11 en résine synthétique qui présente intérieurement une surépaisseur formant un moyeu. Dans le corps 11, dans l'exemple considéré, sont noyés six aimants permanents 12 présentant la forme de segment d'anneau, qui sont par exemple incorporés dans un support en fibre de carbone présentant des logements prévus, le tout étant noyé dans la résine synthétique qui rend le rotor solidaire du moyeu fixé sur l'arbre 8 du moteur. Ces aimants permanents 12 de préférence constitués de Samarium-Cobalt, ont leur axe magnétique parallèle à l'arbre 8 du moteur et engendrent par conséquent des champs magnétiques parallèles à l'arbre. L'épaisseur des aimants permanents 12, dont les faces polaires sont libres de chaque côté, est légèrement plus grande que l'épaisseur de la zone du corps en matière synthétique 11 qui les entoure. Les aimants permanents 12 sont répartis régulièrement sur la périphérie du rotor 10 et disposés de telle sorte que sur chacune des faces du rotor les faces polaires se succédant selon la circonférence, présentent une polarité alternante, ainsi sur chacune des faces du rotor on trouve trois paires de pôles régulièrement répartis.

Dans le cas général on peut avoir p paires de pôles. Les aimants permanents 12 se déplacent dans l'entrefer entre les côtés des tôles 6 et 6' des deux moitiés de stators en regard du rotor, la largeur de cet entrefer étant déterminée par l'épaisseur des bobinages d'induit plats 4, respectivement 4', noyés dans la résine synthétique 13 et 13' et par le jeu nécessaire entre le stator et le rotor. Les flux magnétiques des aimants permanents qui se succèdent selon la circonférence, se ferment à travers les tôles 6 et 6', de telle sorte que les flasques 1 et 1' n'ont aucune fonction magnétique et peuvent être dès lors avantageusement réalisés en aluminium, favorables en ce qui concerne le poids. Les tôles 6 et 6' sont formées à partir d'un ruban de fer enroulé, ce ruban étant muni d'une couche isolante de manière à supprimer les courants de Foucault. Ce fer présente une perméabilité magnétique élevée. Les tôles 6 et 6' peuvent naturellement être exécutées d'une autre manière connue, par exemple par pression d'une poudre de fer mélangée à un liant, les particules de fer étant orientées de manière que la conductibilité électrique dans la direction radiale soit extrêmement faible ou pratiquement inexistante pour empêcher l'apparition de courants de Foucault.

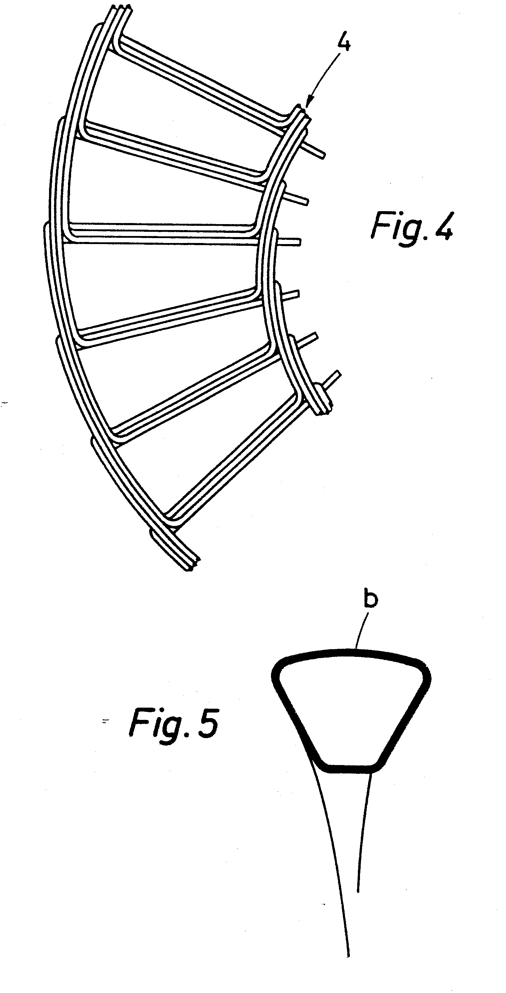

Chacun des bobinages d'induit 4 et 4' est réalisé sous la forme d'un enroulement imbriqué tel qu'il est utilisé dans des moteurs à courant continu conventionnels ; il est constitué de bobines ou de bobinages partiels qui se recouvrent mutuellement partiellement de manière connue pour former un bobinage d'induit en forme de rosette (fig.5). Il y a $n=2pm$ bobines, p étant le nombre de paires de pôles sur un côté du rotor et m le nombre de bobines connectées en série par le circuit de commutation électronique à un instant déterminé, respectivement dans une position déterminée du rotor, bobines coopérant temporairement avec les pôles voisins d'une paire de pôles du rotor passant devant elles. Dans l'exemple considéré $p=3$ et $m=4$ de telle sorte que chaque bobinage d'induit est constitué de 24 bobines désignées par b1 et b24 aux figures 6 et 12. Dans ces figures les bobines sont représentées schématiquement par une seule spire comme il est d'usage ; dans la pratique chaque bobine présente bien entendu plusieurs spires, l'une de ces bobines b étant représentée à la figure 5. Les deux faces de chaque bobine qui croisent radialement le champ magnétique permanent sont à une distance l'une de l'autre égale à une division polaire, c'est-à-dire égale à la distance des milieux de deux pôles d'aimants permanents voisins selon la circonférence correspondant à un décalage de 60° dans l'exemple considéré, comme représenté à la figure 12, dans laquelle les six pôles des aimants permanents 12 sur l'un des côtés du rotor sont schématiquement indiqués. Lorsqu'une bobine est ainsi parcourue par un courant, les directions du courant dans les zones des deux pôles voisins sont opposées.

L'exemple considéré, dans lequel le rotor comprend six aimants permanents et le bobinage d'induit comprend seulement 24 bobines (m=4), a été choisi afin de ne pas compliquer la représentation du bobinage et à le rendre plus lisible. Dans la pratique on choisira naturellement un nombre de bobines plus élevé, par exemple m=8, c'est-à-dire 48 bobines.

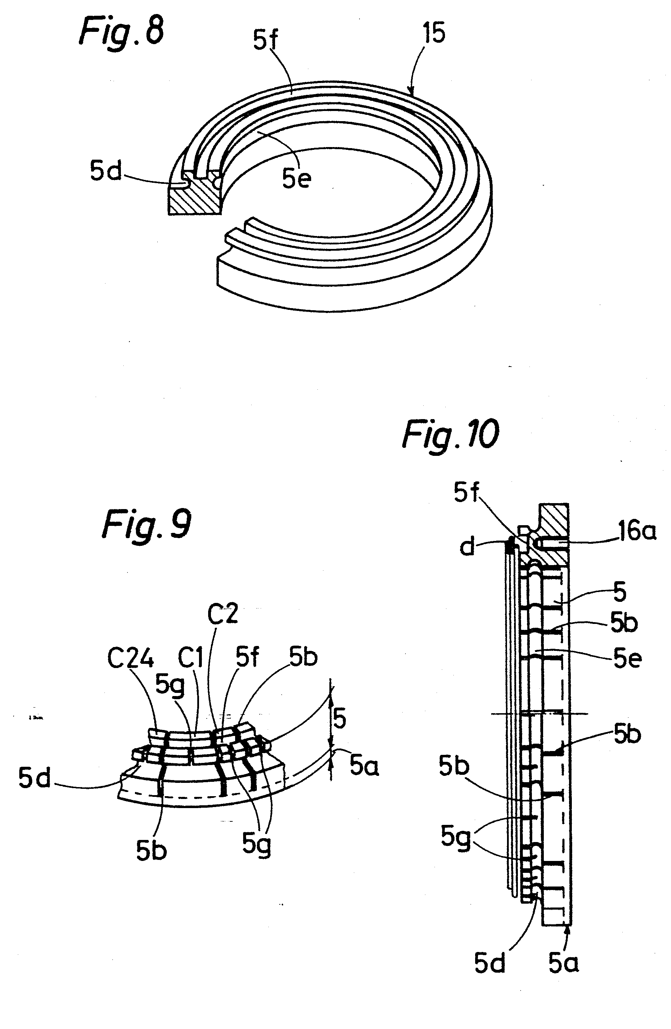

Pour le câblage des bobines individuelles on utilise l'anneau de connexions 5 et dont la fabrication sera décrite plus loin. Cet anneau 5 est subdivisé selon la figure 6 en autant de segments isolés l'un de l'autre qu'il y a de bobines, c'est-à-dire en 24 segments c1 à c24 dans l'exemple considéré. Ces segments en matériau conducteur, en particulier en cuivre, sont séparés par des rainures radiales 5b remplies de matière synthétique pour tenir ensemble les segments en forme d'anneau de connexions 5, comme ceci sera décrit plus en détail plus loin. Les coupes axiales selon les figures 3, 10 et 11 montre le profil de l'anneau de connexions 5, respectivement de l'un de ses segments c1. Au bord extérieur de chaque segment est prévue une encoche 5c pour le maintien par coincement des extrémités de bobines correspondantes. En outre, l'anneau de connexions 5 présente sur une partie voisine de la partie présentant les encoches 5c et d'un diamètre légèrement plus petit que cette dernière, une première rainure annulaire périphérique 5d (fig.10), une seconde rainure annulaire 5e sur sa circonférence intérieure et une troisième rainure 5f sur sa face latérale en regard du rotor, à l'état monté.

Comme ceci apparaît à la figure 12, les deux extrémités de chaque bobine sont reliées à deux segments voisins de l'anneau de connexions, la fin d'une bobine et le début de la bobine voisine étant reliés au même segment. La fin de la bobine b24 et le début de la bobine b1 sont ainsi reliés au même segment c1, comme ceci est visible aussi à la figure 6, ces deux extrémités de bobine étant fixées par coincement ensemble dans l'encoche 5c (fig.11). Le début de la bobine b2 et la fin de la bobine b1 sont reliés ensemble au segment c2, la fin de la bobine b2 et le début de la bobine suivante b3 sont reliés ensemble au segment voisin c3, etc. Toutes les bobines qui ont la même position relativement à une paire de pôles, c'est-à-dire relativement à deux pôles voisins, et par conséquent sont décalées l'une par rapport à l'autre de la valeur de deux divisions polaires, sont excitées dans le même sens et sont par conséquent branchées en parallèle. Selon la figure 12, ce sont ainsi les trois bobines dans chacun des huit groupes de trois qui doivent être branchées en parallèle: b1-b9-b17;b2-b10-b18; etc, jusqu'à b8-b16-b24.

Pour simplifier la disposition du circuit et les fonctions de commutation du circuit de commutation électronique, qui commandent l'excitation des bobines, ces branchements en parallèle sont câblés de manière fixe dans l'anneau de connexions 5; les trois segments constituant les connexions pour les unes ou les autres extrémités des trois bobines de chaque groupe de trois susmentionné sont reliés entre eux par des fils conducteurs. Les segments $c_1$, $c_9$ et $c_{17}$ sont ainsi reliés ensemble par le fil $d_1$, les segments $c_2$, $c_{10}$ et $c_{18}$ par le fil $d_2$, etc et finalement les segments $c_8$, $c_{16}$ et $c_{24}$ par le fil $d_8$, comme ceci est indiqué dans le schéma de câblage selon figure 12 pour les huit conducteurs $d_1$ à $d_8$ et dans la représentation schématique de l'anneau de connexions selon figure 7 pour les fils $d_1$, $d_2$ et $d_3$ par des lignes qui passent à travers le milieu de l'anneau de connexions.

Dans l'exécution pratique ces fils conducteurs de liaison sont avantageusement conduits sur la face de l'anneau de connexions en regard du rotor, le long de la paroi de cet anneau dans la rainure $5f$, comme ceci est représenté pour les fils $d_1$ et $d_2$ à la figure 6 et pour quelques uns de ces fils aux figures 3 et 11, où ces fils sont désignés par d. Ils sont soudés aux segments respectifs avant la terminaison de l'anneau de connexions, qui sera décrite plus loin, et avant la connexion des bobines ou fixés par coincement dans des ouvertures ou des encoches prévues à cet effet. L'anneau de connexions est ensuite noyé dans de la matière synthétique 14, à l'aide d'un moule approprié, sur sa circonférence intérieure et sur sa face présentant la rainure $5f$ avec les fils d, la matière synthétique remplissant simultanément les rainures radiales $5b$ séparant les segments les uns des autres comme décrit plus tard.

En raison des liaisons décrites de chaque fois trois segments à l'intérieur de l'anneau de connexions 5, on a seulement 24/3=8 connexions qui sont contrôlables individuellement et qui doivent être conduits vers l'extérieur par huit conducteurs e1-e8. De manière à pouvoir connecter commodément ces huit conducteurs à l'anneau de connexions, chaque troisième segment de l'anneau de connexions présente une largeur égale au double de la largeur des autres segments et il est pourvu d'une vis 16 pour la connexion du conducteur conduisant vers l'extérieur. Dans l'exemple selon la figure 6 il s'agit des segments c1, c4,...,c22 qui présentent des vis de connexion 16 également représentées aux figures 3 et 11. Dans le moteur monté, les conducteurs e1 à e8 conduisant vers l'extérieur (fig.12) sont, comme déjà mentionnés, conduits à l'extérieur par le canal 7 ménagé dans le flasque 1 du stator correspondant comme ceci est indiqué à la figure 1 pour un conducteur e et sur l'autre côté du stator pour un conducteur e' traversant le canal 7'.

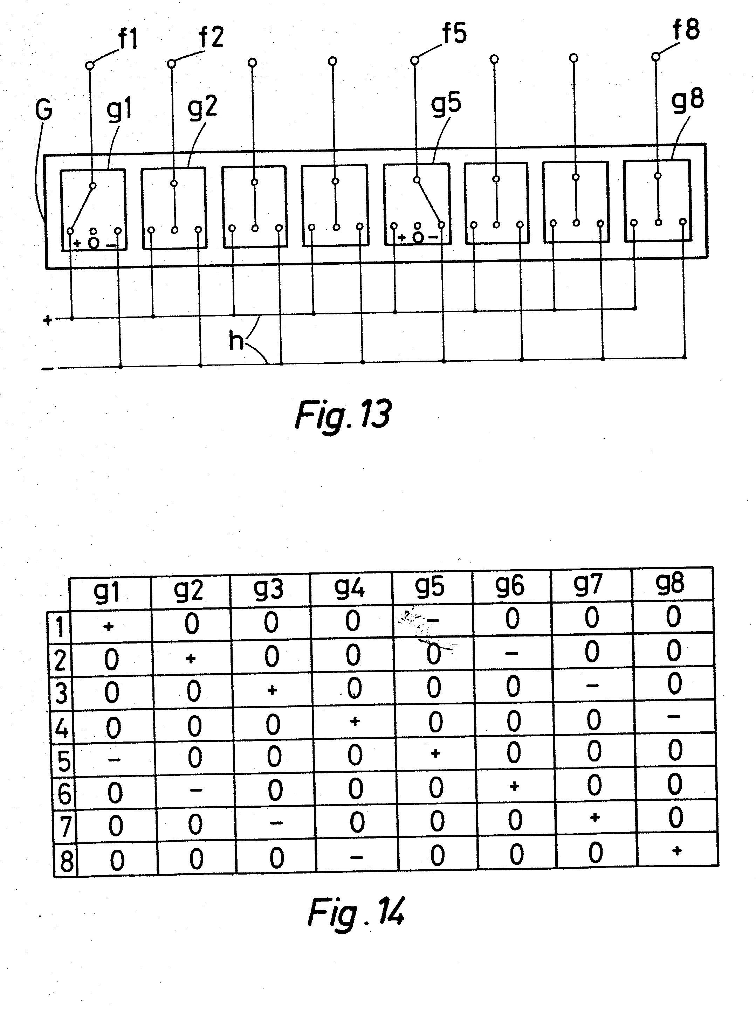

Les bornes extérieures des conducteurs e1 à e8 sont désignées à la figure 12 par les références f1 à f8 et sont, selon le schéma de câblage représenté à la figure 13, connectées à des commutateurs à trois positions g1 à g8 faisant partie du circuit de commutation électronique G. Un circuit de commutation électronique dont les commutateurs électroniques travaillent avec des transistors ou d'autres semi-conducteurs contrôlés est connu en soi et ne fait pas partie de l'objet de la présente invention. Il n'est mentionné ici que pour les besoins de la description du fonctionnement du moteur, respectivement la description de la série d'excitation des bobines du bobinage d'induit. Le fonctionnement de chacun des commutateurs électroniques g1 à g8 est celui d'un commutateur à trois positions, dont le bras de contact peut occuper trois positions différentes : dans la première position, représentée à la figure 13 pour le commutateur électronique g1, le bras de contact est à la borne + qui est reliée aux conducteurs positifs des conducteurs d'alimentation de la source à courant continu h. Dans la deuxième position le bras de contact, comme représenté à la figure 12 pour les commutateurs électroniques g2, g3, g4, g6, g7 et g8, se trouve sur la borne 0, les alimentations des bornes correspondantes f2 à f4 et f6 à f8 étant alors interrompues. Dans la troisième position le bras de contact, comme représenté à la figure 13 pour le commutateur électronique g5, est à la borne - reliée aux conducteurs négatifs de la ligne d'alimentation h.

Dans l'exemple considéré selon les figures 12 et 13 les segments c1, c9 et c17 de l'anneau de connexions sont reliés par le conducteur e1 et la borne extérieure f1 ainsi qu'à travers le commutateur électronique g1 à la ligne + de l'alimentation et les segments c5, c13 et c21 sont reliés par le conducteur e5 et la borne extérieure f5, ainsi que le commutateur électronique g5 à la ligne - de l'alimentation, tandis que les autres segments sont coupés de l'alimentation, les bobines sont donc connectées de la façon suivante : quatre bobines voisines, qui se trouvent au voisinage de deux pôles voisins, sont connectées en série. Ces six groupes de quatre comprenant chacun quatre bobines connectées l'une à la suite de l'autre, sont les suivants : dans la zone de la paire de pôles I-II les bobines b1 à b4, dans lesquelles le courant circule du segment c1 à travers les bobines b1, b2, b3 et b4 vers le segment c5 ; dans la zone de la paire de pôles II-III les bobines b5 à b8 dans lesquelles le courant circule du segment c9 à travers les bobines b8, b7, b6 et b5 vers le segment c5; dans la zone de la paire de pôles III-IV les bobines b9 à b12 dans lesquelles le courant circule du segment c9 à travers les bobines b9 à b12 vers le segment c13; dans la zone de la paire de pôles IV-V les bobines b13 à b16, dans lesquelles le courant circule du segment c17 à travers les bobines b16, b15, b14 et b13 vers le segment c13; dans la zone de la paire de pôles V-VI les bobines b17 à b20 dans lesquelles le courant circule du segment c17 à travers les bobines b17, b18, b19 et b20 vers le segment c21; et finalement dans la zone de la paire de pôles VI-I les bobines b21 à b24, dans lesquelles le courant circule du segment c1 à travers les bobines b24, b23, b22 et b21 vers le segment c21. Dans l'exemple considéré on ne trouve ainsi que quatre bobines connectées l'une à la suite de l'autre (m=4) dans la zone de deux pôles voisins, alors que pratiquement on aura de préférence 8 bobines (m=8).

Après que le rotor a tourné de 1/24 de tour, le codeur commande le circuit de commutation G de telle sorte que les segments c2, c10 et c18 sont connectés à travers la ligne e2 et la borne extérieure f2 du commutateur électronique g2 aux conducteurs + de la ligne d'alimentation h et les segments c6, c14 et c22 sont connectés à travers la ligne e6 et la borne extérieure f6 par le commutateur électronique g6 à la borne - de la ligne d'alimentation, tandis que tous les autres segments sont coupés de l'alimentation. Les groupes constitués de quatre bobines connectées l'une derrière l'autre se déplacent ainsi vers la droite dans la figure 12 d'une bobine. Après une autre rotation du rotor de 1/24 de tour la commutation suivante a lieu, de manière analogue etc. et après un tiers de tour du rotor, c'est-à-dire après huit commutations, le cycle décrit se répète. La tabelle selon figure 14 montre les huits cycles de commutation différentes des commutateurs électroniques g1 à g8. On reconnaît que lors du cinquième cycle de commutation, partant de la position du rotor représenté à la figure 12, les segments c1, c9 et c17 sont reliés à travers le commutateur g1 au conducteur - de la ligne d'alimentation h et les segments c5, c13 et c22 sont reliés au conducteur + de la ligne d'alimentation h à travers le commutateur g5, de telle sorte qu'après 1/6 de tour du rotor toutes les bobines sont excitées en sens inverse. Pendant un tour complet du rotor le cycle décrit se répète donc 3 fois.

Tous les commutateurs électroniques g1 à g8 du circuit de commutation G sont commandés, de manière connue en soi, par le codeur rotatif synchronisé avec le rotor, en fonction de la position angulaire du rotor, comme mentionné en relation avec la figure 1. Ce codeur photo-électrique comprend dans l'exemple considéré huit unités émetteur-récepteur arrangées le long d'un arc de cercle et le disque a trois encoches qui sont régulièrement décalées de 120° l'une par rapport à l'autre de telle manière que pendant chaque rotation de l'arbre moteur le circuit électronique G est commuté 3x8=24 fois. Il peut également s'agir d'un codeur inductif ou d'un générateur à effet Hall connu ou tout autre type de codeur.

On décrira maintenant la fabrication d'un induit 3, respectivement 3' avec ses différentes parties. Les bobines d'un bobinage d'induit 4, respectivement 4' sont bobinées en continu au moyen d'une machine à bobiner connue (brevet FR 2.471.074) en forme de rosette à partir d'un fil isolé avec une laque de résine synthétique. Les liaisons entre les bobines bobinées l'une sur l'autre se trouvent alors au centre de la rosette et la longueur de la section de fil constituant cette liaison, replié plusieurs fois dans l'espace central de la rosette, est dimensionnée de telle sorte qu'ultérieurement, après la séparation des bobines, il reste des fins de bobines suffisamment longues pour le câblage. A travers le bobinage terminé est envoyé un courant assez fort pour que l'isolation en résine synthétique du fil ramollisse et qu'après le refroidissement subséquent du bobinage, les isolations des fils voisins collent entre elles. On obtient ainsi un bobinage rigide auto-portant se présentant sous la forme d'un panier plat, dont la zone périphérique, qui comprend un grand nombre de segments de fils s'étendant selon la périphérie, à savoir les côtés extérieurs superposés des bobines, forme une surépaisseur en forme de bourrelet partiellement replié d'un côté.

La prochaine phase consiste à séparer toutes les bobines les unes des autres, dont les extrémités se trouvent dans la zone centrale de la rosette, par sectionnement des segments de fils reliant encore les bobines, respectivement par séparation des liaisons des bobines, ce qui donne une rosette comme montré à la figure 4.

L'anneau de connexions 5, respectivement 5' est fabriqué de la manière suivante : on part d'une ébauche en cuivre de forme annulaire 15 (fig.8) auquel on donne le profil désiré par tournage ou fraisage pour obtenir les rainures 5d, 5e et 5f mentionnées plus haut et comme représenté à la figure 8. On forme ensuite les rainures radiales 5b, comme représenté à la figure 9 en fraisant le côté présentant la rainure annulaire 5f, à une profondeur telle qu'il reste encore une zone 5a présentant une épaisseur d'environ 1 mm ou quelques millimètres sur le côté de l'anneau opposé à la rainure 5f, de manière à maintenir ensemble l'anneau de connexions avec ses segments c1, c2 etc., ainsi formés. On fraise également au milieu des segments c1, c2, etc. des rainures 5g moins profondes que les rainures 5b, sur lesquelles on fixe les fils conducteurs d destinés à relier les paires de segments décrites plus haut, aux segments concernés, les fils d étant disposés selon un arc de cercle à l'intérieur de cette rainure 5f. La figure 10 montre une coupe axiale de l'anneau usiné selon la figure 9 avec schématiquement montrés les fils conducteurs d courbés le long d'un arc de cercle et qui devraient être insérés dans la rainure 5f.On n'a pas représenté les rainures 5g sur la figure 10.

L'anneau de connexions 5 ainsi préparé et muni des fils d est ensuite posé dans un moule de forme annulaire et noyé dans une matière synthétique 14 comme déjà décrit plus haut. Lors de cette opération les fils conducteurs d sont totalement noyés dans la matière synthétique qui remplit la rainure 5f, la matière synthétique recouvrant également la circonférence intérieure de l'anneau de connexions en remplissant la rainure annulaire 5e et la circonférence extérieure de l'anneau de connexions en remplissant la rainure annulaire 5d. La matière synthétique 14 remplit naturellement aussi les rainures radiales 5b, et pénétrant dans les rainures radiales et les rainures annulaires, assure sa liaison solide avec l'anneau métallique. On découpe ensuite dans le milieu des segments c1, c2, etc. les encoches 5c (figure 10 et 11) et on forme des trous taraudés 16a (figure 10) dans les segments auxquels seront plus tard connectées les liaisons conduisant vers l'extérieur. On a représenté, pour des raisons de commodité, les encoches 5c et les trous 16a sur l'anneau 5 de la figure 10 mais ils ne sont crées, comme déjà mentionne, qu'aprés le moulage de l'anneau 5 dans la matière synthétique 14.

La face de l'anneau de connexions opposée à la rainure 5f est ensuite usinée jusqu'à ce que la zone continue 5a libre de rainures radiales (fig.10) soit enlevée de telle sorte que les segments individuels c1, c2, etc sont séparés les uns des autres, isolés et ne sont plus maintenus ensemble que par la matière synthétique 14 comme représenté à la figure 11.

La phase de fabrication suivante consiste à fixer le bobinage d'induit avec ses bobines à l'anneau de connexions 5, les extrémités des bobines individuelles étant fixées aux segments correspondants par coincement dans les encoches 5c comme déjà décrit. A la figure 11, on a indiqué la fixation de l'une des extrémités des bobines b1 et b24 dans l'encoche 5c du segment c1. L'unité constituée de l'anneau de connexions et du bobinage d'induit est terminée par le montage des vis de connexion 16 aux huit segments mentionnés plus haut. Ces vis peuvent naturellement être montées avant la liaison du bobinage d'induit avec l'anneau de connexions.

La dernière phase de la fabrication de l'induit consiste à disposer dans un moule approprié l'ensemble constitué du bobinage d'induit 4 et de l'anneau de connexions 5 avec le fer d'induit 6 préalablement enroulées et posées sur la face extérieure des bobines, c'est-à-dire sur la face des bobines en regard du flasque du stator, et à noyer le tout dans la matière synthétique 13, comme représenté à la figure 3. Les matières plastiques 13 et 14 sont de préférence une résine epoxyde. Le bobinage d'induit est ainsi complètement noyé dans la résine synthétique 14, qui s'étend en outre sur toute la périphérie du fer 6 dans l'exemple considéré ; l'espace entre la périphérie de l'anneau de connexions 5 et les connexions des bobines conduisant aux encoches 5c, respectivement la périphérie du fer 6, est rempli de matière synthétique 14 jusqu'à la hauteur de la face extérieure de l'anneau de connexions 5. De cette manière on obtient un induit préfabriqué compact comprenant un anneau de connexions câblé aux segments duquel est connecté le bobinage d'induit 4, et l'anneau de fer 6. Il ne reste qu'à fixer cet induit 3 sur la face intérieure d'un flasque de moteur 1, après qu'au moyen des vis 16, les conducteurs extérieurs e ont été connectés aux segments correspondants de l'anneau de connexions et conduits à travers les canaux correspondant 7 dans le flasque du stator.

L'induit décrit se distingue, d'une part, par sa fabrication nouvelle et rationnelle et, d'autre part, en ce que les fils des bobines ne sont pas disposés, comme d'ordinaire, dans des rainures des tôles. La fabrication du fer de l'induit et le montage du bobinage d'induit sur le fer sont ainsi sensiblement simplifiés. En outre, on supprime la limitation de la quantité de cuivre, respectivement de l'épaisseur des fils utilisés pour le bobinage d'induit due à la grandeur des rainures des tôles d'induit. Il est possible au besoin de construire des bobinages d'induit avec des quantités de cuivre, respectivement des fils de diamètres très différents et des nombres de tours très différents des bobines et de surmouler sans autre avec une matière synthétique les mêmes fers d'induit préfabriqués avec des anneaux de connexions correspondant, la pose des fils de bobines dans les rainures des tôles d'induit, qui doivent être adaptées à l'épaisseur des fils étant supprimée. Par la suppression des encoches ce dispositif présente une grande régularité de rotation, même à très faibles vitesses.

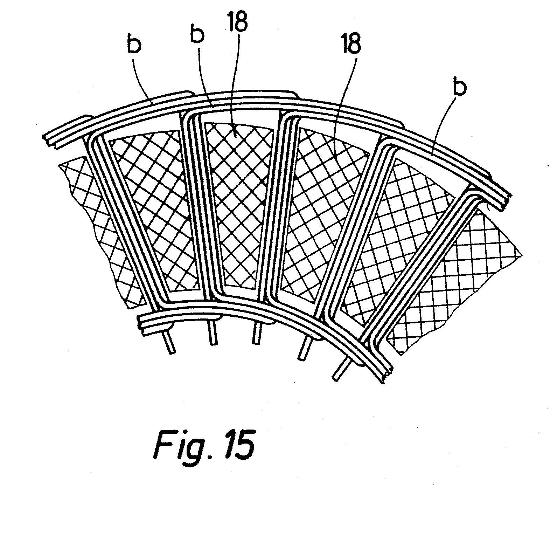

Dans une forme d'exécution particulièrement judicieuse d'un induit dans un moteur selon l'invention, les espaces triangulaires, respectivement en forme de segments d'anneaux (fig.15) entre les côtés dirigés radialement des bobines individuelles b sont remplis par des pièces 18 en forme de coin, respectivement de secteur en matériau ferro-magnétique, avant le surmoulage du bobinage par la matière synthétique. Ces pièces 18 sont, vues en direction de l'axe du moteur, approximativement aussi épaisses que le bobinage d'induit lui-même et renforcent ainsi le champ d'induit, en réduisant l'entrefer d'une valeur correspondant approximativement à l'épaisseur du bobinage. Si d'autre part, on veut maintenir constant le champ d'induit, les aimants permanents peuvent avoir une épaisseur moindre en utilisant les fers d'induit 18 remplissant les espaces vides des bobines, ce qui a pour effet d'abaisser le moment d'inertie du rotor. Les fers d'induit 18 peuvent avantageusement être constitués d'une manière connue en soi d'une poudre de fer spéciale, laquelle, mélangée avec une masse collante, puis formée sous pression de telle sorte que la conductibilité dans la direction radiale est très faible pour empêcher la formation de courant de Foucault.

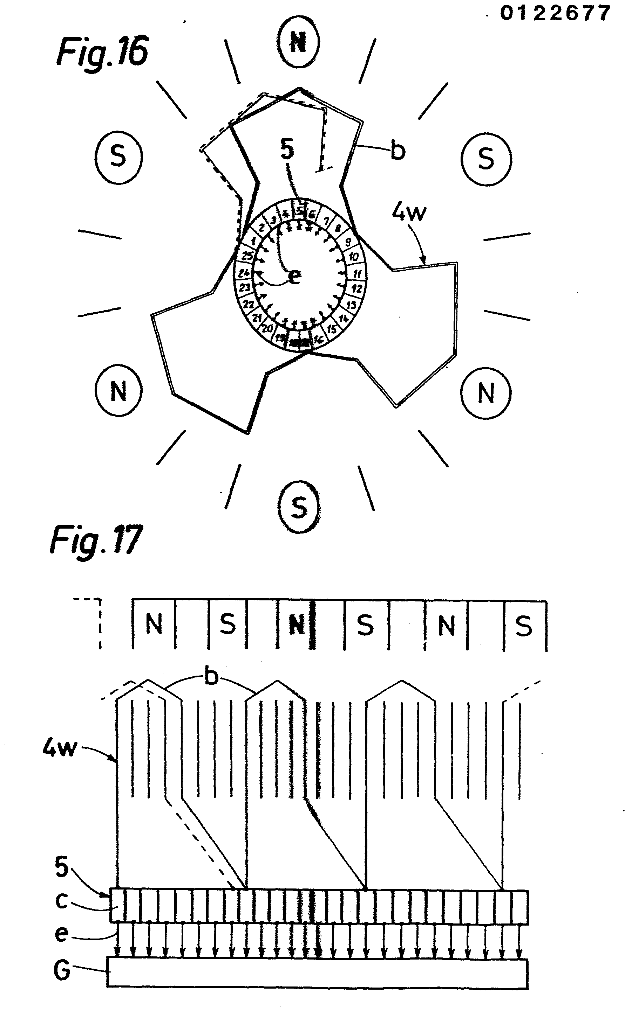

L'invention n'est pas limitée aux formes d'exécution décrites, mais s'étend à toute variante d'exécution en ce qui concerne la forme de l'induit et de son bobinage, dans le cadre de l'invention telle que revendiquée. Il est ainsi possible, par exemple, au lieu du bobinage d'induit imbriqué ou en boucle décrit dans l'exemple d'exécution précédant, d'utiliser un bobinage d'induit ondulé comme ceci est également usuel dans les moteurs à courant continu conventionnels et représenté sur les figures 16 et 17 qui correspondent à la représentation des figures 6 et 12, respectivement. Tandis que dans un bobinage imbriqué les bobines se trouvant immédiatement l'une à côté de l'autre sont commutées en série, dans un bobinage ondulé, ce sont les bobines séparées de la valeur d'environ une double division polaire. Dans l'exemple considéré (fig.16 et 17) le bobinage ondulé 4W comprend 25 bobines b connectées de la manière montrée à l'anneau de connexions 5 qui comprend 25 segments c. Les fils conducteurs internes de l'anneau de connexions sont supprimés et chaque segment c de cet anneau est lié a un conducteur extérieur e pour être commuté individuellement par un circuit électronique de commutation G.

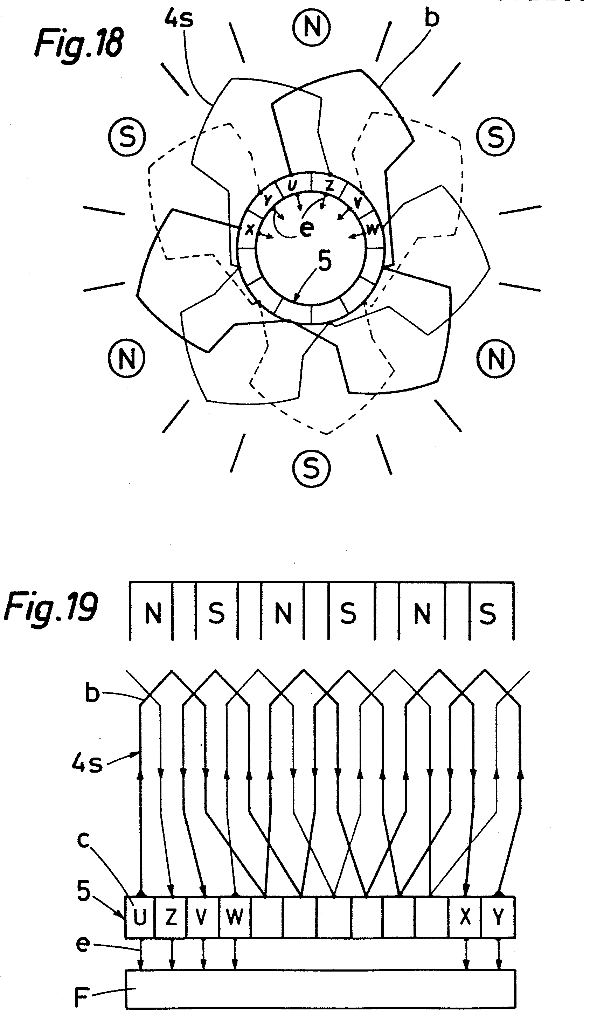

Le bobinage peut être conçu aussi pour un induit d'un moteur synchrone alternatif normal ou autosynchronisé, comme illustré aux figures 18 et 19 par le schéma d'un bobinage 4S destiné à un moteur synchrone. Dans cet exemple, le bobinage 4S comporte 9 bobines b connectées à l'anneau de connexions 5 qui comprend 12 segments c. De ces segments, seulement six sont reliés à l'extérieur x,y,z et u,v,w à un circuit électronique F, connu, qui fournit au moteur un courant alternatif et triphasé, d'une fréquence, d'une amplitude et d'une phase appropriées au régime demandé.

- 1 -

Revendications

1. Procédé de fabrication d'un induit pour un moteur électrique à commutation électronique comprenant un rotor muni d'aimants créant un champ magnétique axial, et au moins un induit fixe disposé de l'un des côtés du rotor, caractérisé en ce qu'on procède comme suit :

a) on fabrique et prépare d'abord les parties séparées suivantes de l'induit :

a1) on confectionne un bobinage d'induit plat en forme de rosette avec des bobines qui se recouvrent mutuellement partiellement et dont les extrémités séparées débouchent toutes dans l'espace intérieur central de la rosette,

a2) on confectionne un anneau de connexions adapté à l'espace circulaire intérieur de la rosette et présentant des segments isolés électriquement les uns des autres en matériau conducteur, pour la connexion des extrémités des bobines, le nombre de ces segments étant au moins aussi grand que le nombre des extrémités des bobines à connecter séparément l'une de l'autre, au moins quelques-uns de ces segments sont arrangés de manière telle que des conducteurs extérieurs peuvent être connectés ultérieurement conduisant au circuit de commutation du moteur, et

a3) on confectionne un fer d'induit en forme d'anneau circulaire en matériau magnétique dont le diamètre intérieur est un peu plus grand que le diamètre extérieur de l'anneau de connexions, constitué de préférence d'un ruban de fer à surfaces isolées et enroulé sur lui-même ;

b) on assemble ensuite des parties de la manière suivante ;

b1) on relie les extrémités des bobines aux segments de l'anneau de connexions de la manière correspondant à la configuration de bobinage désiré, ces extrémités de bobines étant de préférence introduites à force dans des entailles prévues sur la face périphérique des segments.

b2) puis on dispose la partie ainsi constituée du bobinage d'induit et de l'anneau de connexions, et le fer d'induit en forme d'anneau, coaxialement dans un moule, l'un des côtés de la bobine plate reposant sur l'un des côtés plats du fer d'induit, et on noye les parties susmentionnées dans une masse de résine synthétique, de telle sorte qu'au moins les côtés des segments de l'anneau de connexions qui se trouvent après montage du côté opposé au rotor, restent libres de résine, pour pouvoir être connectés auxdits conducteurs extérieurs.

2. Procédé selon la revendication 1, caractérisé en ce que le bobinage d'induit est bobiné en continu et que les sections de fils se trouvant dans l'espace intérieur de la rosette et reliant entre elle les bobines bobinées l'une après l'autre, sont coupées.

3. Procédé selon la revendication 1, caractérisé en ce que les bobines individuelles du bobinage d'induit sont bobinées séparément.

4. Procédé selon la revendication 1, caractérisé en ce que pour confectionner l'anneau de connexions, on part d'une ébauche annulaire, de préférence en cuivre, on profile cette ébauche et on la subdivise en segments, dans le nombre désiré, on usine des rainures depuis l'un des côtés de l'anneau et à une profondeur telle que l'anneau de connexions ne soit maintenu que par une épaisseur de matière juste suffisante, qu'on noye l'anneau de connexions ainsi préparé dans une matière synthétique au moyen d'un moule, de telle manière que la matière synthétique remplisse les rainures mais laisse libre les segments aux endroits, auxquels les extrémités des bobines seront ultérieurement connectés, et respectivement les côtés, auxquels lesdits conducteurs extérieurs seront ultérieurement connectés et qui se trouveront après montage du moteur sur le côté opposé au rotor, et qu'on élimine finalement ladite épaisseur de matière sur le côté correspondant de l'anneau de connexions par une opération d'usinage, de telle sorte qu'il ne subsiste que les segments isolés l'un de l'autre et maintenus par la matière synthétique remplissant les rainures.

5. Procédé selon la revendication 4, caractérisé en ce qu'avant de noyer l'anneau de connexions dans la matière synthétique, on relie entre eux par des fils conducteurs tous les segments auxquels les extrémités des bobines devant être excitées en parallèle sont reliées, ces fils conducteurs s'étendant en arc de cercle le long de l'anneau de connexions, de préférence insérés dans une rainure de l'anneau de connexions, de telle sorte que ces fils conducteurs sont également noyés dans la masse de matière synthétique lors du surmoulage par la matière synthétique.

6. Procédé selon la revendication 1, caractérisé en ce qu'avant le surmoulage du bobinage d'induit par une matière synthétique, on introduit des pièces ferreuses en forme de segment d'anneau ou de coin dans les interstices existants entre deux côtés radiaux voisins des bobines, ces pièces ferreuses étant de préférence constituées par de la poudre de fer mélangée avec un liant.

7. Procédé selon l'une des revendications 1 à 6, caractérisé en ce que l'on confectionne un bobinage imbriqué ayant un nombre de bobines égal à un multiple du nombre de paires de pôles des aimants sur l'un des côtés du rotor, ou un bobinage ondulé, et destiné pour un moteur à courant continu.

*Fig. 1*

0122677

Fig. 3

Fig. 2

4

Fig.4

b

Fig.5

*Fig. 6*

*Fig. 7*

*Fig.8*

*Fig.10*

*Fig.9*

0122677

*Fig. 12*

*Fig. 11*

*Fig.13*

| | g1 | g2 | g3 | g4 | g5 | g6 | g7 | g8 |
|---|---|---|---|---|---|---|---|---|
| 1 | + | 0 | 0 | 0 | − | 0 | 0 | 0 |
| 2 | 0 | + | 0 | 0 | 0 | − | 0 | 0 |
| 3 | 0 | 0 | + | 0 | 0 | 0 | − | 0 |
| 4 | 0 | 0 | 0 | + | 0 | 0 | 0 | − |
| 5 | − | 0 | 0 | 0 | + | 0 | 0 | 0 |
| 6 | 0 | − | 0 | 0 | 0 | + | 0 | 0 |
| 7 | 0 | 0 | − | 0 | 0 | 0 | + | 0 |
| 8 | 0 | 0 | 0 | − | 0 | 0 | 0 | + |

*Fig.14*

*Fig. 15*

0122677

*Fig.16*

*Fig.17*

*Fig.18*

*Fig.19*

Office européen
des brevets

**RAPPORT DE RECHERCHE EUROPEENNE**

EP 84 20 0512

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-A-1 463 822 (BÜHLER) <br> * Page 2, ligne 20 - page 8, ligne 18; figures 1-4 * | 1,3 | H 02 K 15/12 <br> H 02 K 29/02 |
| Y | FR-A-2 423 903 (GUIMBAL) <br><br> * Page 2, ligne 12 - page 4, ligne 24; figures 1,2 * | 1,3,6, 7 | |
| A | GB-A-2 063 726 (MAVILOR) <br> * Page 1, ligne 6 - page 2, ligne 71; figures 1-3 * | 1,3,4 | |
| D,A | EP-A-0 030 901 (MAVILOR) <br> * Page 1, ligne 19 - page 2, ligne 9; page 9, lignes 20-38; figures 3,13 * | 2 | |
| A | DE-A-1 538 749 (BÜHLER) <br> * Page 6, ligne 20 - page 8, ligne 17; figure 5 * | 5 | DOMAINES TECHNIQUES RECHERCHES (Int. Cl. 3) <br><br> H 02 K |
| A | DE-B-1 227 992 (LICENTIA) <br> * Colonne 2, ligne 46 - colonne 4, ligne 27; figure * | 5 | |

Le présent rapport de recherche a été établi pour toutes les revendications

| Lieu de la recherche | Date d'achèvement de la recherche | Examinateur |
|---|---|---|
| LA HAYE | 14-06-1984 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82